# EUROPEAN PATENT APPLICATION

(11) **EP 4 617 405 A1**
(43) Date of publication of application: **17.09.2025**
(21) Application number: 23887604.9
(22) Date of filing: 31.08.2023
(51) Int. Cl.: C25B 9/60, C25B 1/04

(54) **GAS-LIQUID DIFFUSER FOR HYDROGEN PRODUCTION BY USING ALKALINE ELECTROLYTIC WATER AND USE THEREOF**

(30) Priority: 11.11.2022 CN 202211412049
(71) Applicant: Hua Xia Hydrogen Technology (Xiamen) Co., Ltd., Xiamen, Fujian 361000 (CN)
(72) Inventor: WANG, Wenbiao, Xiamen, Fujian 361005 (CN); GAO, Xiaoping, Xiamen, Fujian 361005 (CN); DAI, Jintong, Xiamen, Fujian 361005 (CN)
(74) Representative: Winter, Brandl - Partnerschaft mbB
(86) International application number: PCT/CN2023/116260
(87) International publication number: WO 2024/098909

(57) **Abstract**

The present invention provides a gas-liquid diffuser for hydrogen production by alkaline water electrolysis. The gas-liquid diffuser is arranged between an electrode plate and a diaphragm to form a gas-liquid diffusion layer, is made of a woven web or a mesh plate, and is formed to have a plurality of flow channels alternately arranged on both sides of the gas-liquid diffuser; and in a direction perpendicular to the flow channels, the cross section of the gas-liquid diffuser is in a wavy shape formed by the plurality of flow channels. By using the gas-liquid diffuser, contact resistance is effectively reduced, electrolysis efficiency is improved, stress concentration at a contact position is lowered, diaphragm is prevented from being crushed, flow resistance of a fluid is reduced, formation of a retention and backflow in an internal flow field is avoided, the risk of hydrogen and oxygen interpenetration is lowered, and it is useful to increase the contact area between an electrode surface and an alkaline electrolyte.

## Description

### Technical Field

The present invention relates to the field of electrochemical hydrogen production technology, and more specifically, to a gas-liquid diffuser for hydrogen production by alkaline water electrolysis.

### Background

The development of hydrogen energy can fundamentally alleviate the energy security issues caused by China's large import of oil and gas resources. Its specific properties as an energy storage medium can promote the rapid development of large-scale renewable energy and is an important means for China to achieve its "dual carbon goals".

The hydrogen production technology by alkaline water electrolysis is widely used in China, with a mature history of several decades and a high degree of commercialization. It is one of the most promising electrolysis hydrogen production technologies. A core component of the hydrogen production technology by alkaline water electrolysis is the alkaline electrolyzer. In an alkaline electrolyzer, the electrolytic cell is divided into two chambers by using a diaphragm, and a metal or an alloy is used as an electrode distributed in both chambers. The electrolyte is a potassium hydroxide solution with a concentration of 20-30 wt%, and the working fluid has a temperature of 70-100 °C and a pressure of 100-3000 kPa. The main reaction is water decomposition. At present, a bipolar electrolyzer is commonly used in alkaline water electrolysis industry. This type of the electrolyzer has an electrolyzer container formed by regularly stacking a plurality of chambers, wherein each electrolysis chamber mainly comprises a pole frame, a bipolar main electrode plate (i.e. a bipolar plate), a diaphragm, an anode/a cathode, and a sealing gasket. The bipolar plate, which has a cathode on one side, and an anode on the other side, is welded onto the pole frame to form a whole. Each chamber is divided into a cathode chamber and an anode chamber, with a diaphragm located between the cathode and the anode to mainly prevent the mixing of hydrogen and oxygen.

CN205803608U discloses an alkaline water electrolyzer with a high current density, comprising several electrolysis chambers. Each electrolysis chamber comprises a cathode frame, an anode frame, and a sealing gasket between them. A diaphragm is arranged between the anode for oxygen evolution and the cathode for hydrogen evolution. A bipolar plate welded to the cathode frame is arranged on the outside of the cathode, and a bipolar plate welded to the anode frame is also provided on the outside of the anode. A conductive current collector mesh with a three-dimensional porous structure is arranged between the cathode/anode and the bipolar plate. This document is incorporated herein by reference.

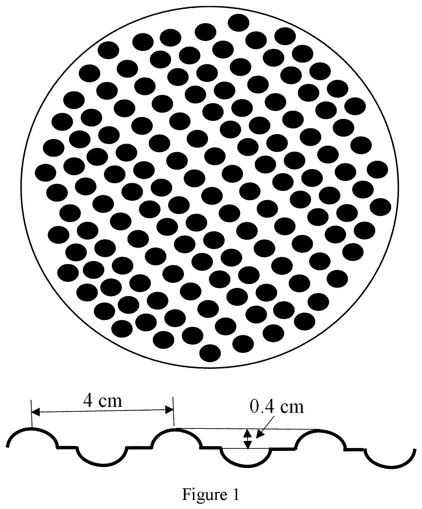

At present, most alkaline water electrolyzers adopt a structure composed of embossed plate with thermal spray nickel screen, that is, the bipolar plate adopts a stamped circular plate with papillary protrusions and depressions, and the protrusion and depression parts of the bipolar plate serve as diffusion layers, while the electrodes adopt nickel screen or thermal spray nickel screen. Figure 1 shows this kind of embossed plate and a sectional schematic diagram thereof, which is formed by alternately stamping protrusions and depressions on a circular plate used as a bipolar plate. The distance between two adjacent protrusions (or depressions) is usually about 4-5 cm, and the height of the protrusion (or the depth of the depression) is usually about 0.4-0.5 cm. This kind of structure is relatively simple and cost-effective.

However, during the installation of the alkaline water electrolyzer, it is necessary to align the protrusions of the two embossed plates used as bipolar plates (i.e. the bipolar plate at the cathode side and the bipolar plate at the cathode side), which not only makes the process difficult, but also results in the embossed plates being unable to press the electrode components (i.e. the cathode, the anode, and the diaphragm sandwiched between them) tightly. Since the embossed plate and the electrode are only brought into point contact at the protrusion positions, the contact resistance between the electrode and the embossed plate is high, resulting in a large voltage loss and low electrolysis efficiency (i.e. hydrogen production efficiency) of the electrolyzer. In addition, the cost of stamping molds for stamping a embossed plate is high, and the processed protrusions have a poor height consistency, which may lead to higher pressure at positions where the protrusion size is too high, and even crush the diaphragm of the electrode component. On the other hand, the internal structure of the embossed plate has many protrusions, resulting in confusion in the flow field of the gas-liquid mixture fluid inside the electrolyzer, increasing the internal resistance of the fluid, generating retention and backflow phenomena at local positions (especially at the positions where the fluid flow is blocked by protrusions), making it difficult for gas to be discharged, which may easily lead to an excessive local temperature, diaphragm damage, hydrogen and oxygen interpenetration in the chambers, and gas covering the electrode surface which shields the electrode from contact with alkaline electrolyte, increasing the electrode surface that cannot generate electrochemical reactions.

Therefore, there is a need for improvement in the structure of a hydrogen production device by alkaline water electrolysis, especially the electrolysis chambers.

### Summary of the Invention

The purpose of the present invention is to resolve at least some defects in the electrolyzer for hydrogen production by alkaline water electrolysis in the prior art, such as high cost of stamping molds for embossed plates, the poor height consistency after stamping, excessive pressure on electrode components, difficulty in aligning protrusions, excessive contact resistance, flow field retention and backflow problems of internal fluids, uneven internal temperature, etc. By providing a diffusion layer, an improved electrolyzer for hydrogen production by alkaline water electrolysis is provided.

The first aspect of the present invention provides a gas-liquid diffuser for hydrogen production by alkaline water electrolysis, which is arranged between an electrode plate and a diaphragm to form a gas-liquid diffusion layer. The electrode plate comprises an anode plate, a cathode plate, and/or a bipolar plate. The gas-liquid diffuser is made of a woven web or a mesh plate, and is formed to have a plurality of flow channels alternately arranged on both sides of the gas-liquid diffuser, and the cross section of the gas-liquid diffuser in a direction perpendicular to the plurality of flow channels is in a wavy shape formed by the plurality of flow channels.

The second aspect of the present invention provides an electrode with a diffusion layer, comprising an electrode and a gas-liquid diffuser of the present invention, wherein the electrode is welded onto the gas-liquid diffuser.

The third aspect of the present invention provides an electrode plate with a diffusion layer, comprising an electrode plate and a gas-liquid diffuser of the present invention. The electrode plate comprises an anode plate, a cathode plate, and/or a bipolar plate, and is welded onto the gas-liquid diffuser.

The fourth aspect of the present invention provides an electrolyzer for hydrogen production by alkaline water electrolysis, comprising a gas-liquid diffuser of the present invention arranged between the electrode plate and the diaphragm.

The present invention has the following beneficial effects: the present invention uses a gas-liquid diffuser to transform the contact between it and the electrode or the diaphragm into a surface contact, which not only effectively reduces the contact resistance and improves the electrolysis efficiency, but also can reduce the stress concentration at the contact position and avoid crushing the diaphragm. The wave shaped structure of the flow channels, which is formed by alternately arranging the flow channel on both sides of the gas-liquid diffuser, allows fluid to flow on both sides of the gas-liquid diffuser, provides more flow paths, larger flow channel cross-sections, and greater flow rates, reduces flow resistance of a fluid, avoids forming a retention or backflow in internal flow field, and facilitates gas discharge. Thus, the electrolyzer is less prone to membrane damage caused by excessive temperature, the risk of hydrogen and oxygen interpenetration is lowered, and it is useful to increase the contact area between an electrode surface and an alkaline electrolyte.

### Brief Description of the Drawings

Figure 1 is a structural schematic diagram for a embossed plate-bipolar plate in the prior art and the cross-section thereof. The upper figure is a schematic diagram of the embossed plate, and the lower figure is a schematic diagram of the cross-section of the embossed plate; and

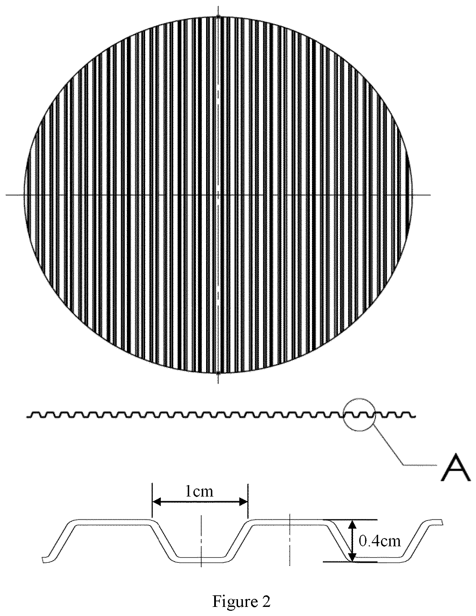

Figure 2 is a structural schematic diagram of a gas-liquid diffuser with flow channels according to the present invention and the cross-section thereof. The above figure is a schematic diagram of the gas-liquid diffuser, the middle figure is a schematic diagram of the cross-section of the gas-liquid diffuser, and the below figure is an enlarged schematic diagram of the cross-section of part A.

### Detailed Description

The present invention will be further explained in detail through the accompanying drawings and embodiments. Through these descriptions, the features and advantages of the present application will become more clearly defined.

The term "exemplary" used here means "serving as an example, embodiment, or illustration." Any embodiment described here as "exemplary" should not be interpreted as being superior or better than other embodiments. Although various aspects of the embodiments are shown in the drawings, they need not be drawn to scale unless specifically indicated.

Furthermore, the technical features in different embodiments of the present application described below can be combined with each other if they do not conflict.

At present, the traditional bipolar plate adopts the form of a embossed plate, as shown in Figure 1, which is formed by alternately stamping protrusions and depressions on a circular plate. When installing into an electrolyzer for alkaline water electrolysis, an electrode component is sandwiched between two embossed plates which are used as bipolar plates, and the protrusions of the two embossed plates need to be aligned so that the protrusion and depression parts of the embossed plates serve as diffusion layers.

The present invention designs a novel electrolyzer for alkaline water electrolysis, and combines an electrode plate with a substantially flat plate structure and a gas-liquid diffuser with flow channels, to replace the traditional embossed plate. Thus, an electrolyzer with a completely novel gas-liquid diffusion layer structure is formed.

Based on this, in one embodiment of the present invention, a gas-liquid diffuser for hydrogen production by alkaline water electrolysis is provided, which is arranged between an electrode plate and a diaphragm to form a gas-liquid diffusion layer, wherein the electrode plate comprises an anode plate, a cathode plate, and/or a bipolar plate. The gas-liquid diffuser is made of a woven web or a mesh plate, and is formed to have a plurality of flow channels alternately arranged on both sides of the gas-liquid diffuser. The cross section of the gas-liquid diffuser in a direction perpendicular to the plurality of flow channels is in a wavy shape formed by the plurality of flow channels. **In** the present invention, the gas-liquid diffuser is made of a woven web or a mesh plate. By utilizing its elasticity, the gas-liquid diffuser not only can reduce the stress concentration at the contact position through the surface contact generated by deformation, to avoid crushing the diaphragm, but also can improve the conductivity of the gas diffuser through the surface contact generated by deformation. In the present invention, compared to the structure that has flow channels formed on only one side of the gas diffuser, the gas diffuser, which has the plurality of flow channels alternately arranged on both sides, can provide more flow channels, and increase the cross-sectional area of the flow channels, which not only avoids retention or backflow in the internal flow field, but also effectively improves the quality of gas-liquid transmission.

In the present invention, the gas-liquid diffuser can be used in various electrolyzers, including single pole electrolyzers, wherein an anode plate or a cathode plate is formed by arranging the gas liquid diffuser on one surface of the electrode plate with a substantially flat plate structure; and bipolar electrolyzers, wherein a bipolar plate is formed by arranging the gas liquid diffuser on both surfaces of the electrode plate with a substantially flat plate structure.

The gas-liquid diffuser is made of a woven web or a mesh plate. The woven web or mesh plate is required to be made of a metal and/or an alloy which is stable under alkaline conditions, preferably made of a material selected from the group consisting of nickel, stainless-steel, nickel-plated carbon steel, and titanium. Metal woven web is made by weaving or other similar means with the metal wires of a certain diameter (such as 0.5 mm nickel wire). Metal mesh plate is a metal sheet with meshes, which are formed by punching on specialized machines, or by drawing a metal sheet after punching slits. In the present invention, metal woven web or metal mesh plate is formed to have a plurality of flow channels alternately arranged on both sides. These flow channels are alternately formed on both sides of the metal woven web or metal mesh plate, and adjacent flow channels are located on different sides, with substantially same shape, but opposite direction, so that the cross-section of the gas-liquid diffuser in the direction perpendicular to the plurality of flow channels is in a wave shape formed by the plurality of flow channels. These flow channels on the gas-liquid diffuser can provide more flow paths and greater flow rates for a gas-liquid mixture fluid of hydrogen or oxygen in electrolyzer, reduces flow resistance of a fluid, avoids forming a retention or backflow in internal flow field, and facilitates gas discharge, so that the electrolyzer is less prone to membrane damage caused by excessive temperature, the risk of hydrogen and oxygen interpenetration is lowered, and it is useful to increase the contact area between an electrode surface and an alkaline electrolyte.

In one embodiment of the present invention, as shown in Figure 2, the metal woven web or mesh plate may be formed into alternating isosceles trapezoidal shapes through a bending process, thereby forming a plurality of isosceles trapezoidal flow channels on both sides of the gas-liquid diffuser. By using a trapezoidal structure, the surface contact area between the gas diffuser and the diaphragm can be further increased, thereby the conductivity of the gas diffuser can be further increased, and the diaphragm can be avoided from crushing. The diffusion layer formed by the gas-liquid diffuser needs to meet the volume requirements of a gas-liquid mixture fluid in electrolysis chambers, and the flow channel width can be adjusted according to the needs on hydrogen output and fluid flow rate. For example, in a preferred embodiment of the present invention, the isosceles trapezoid is selected with the upper and lower bases of 0.2-3.6 cm, with a height of 0.2-0.8 cm. The preferred upper and lower bases are 0.2-3.2 cm, with a height of 0.2-0.8 cm, which can achieve better flow field effects.

In one embodiment of the present invention, an electrode can be further arranged between the gas-liquid diffuser and the diaphragm. The electrode can be made of nickel mesh, thermal sprayed nickel screen, or other suitable electrode materials. In this case, the gas-liquid diffuser will be arranged between the electrode plate with a substantially flat plate structure and the electrode. If necessary, the gas-liquid diffuser can be welded to the electrode plate and/or the electrode, which is beneficial for the assembly of the electrolyzer.

The present invention uses a gas-liquid diffuser to replace the embossed plate having the protrusions, so that the contact between the gas-liquid diffuser and the electrode or diaphragm becomes a surface contact, which not only avoids complex protrusions alignment during installation, but also avoids point contact between the embossed plate and the electrode. Through this surface contact, the contact area can be increased by tens or even hundreds of times, which not only effectively reduces contact resistance, and improves conductivity and electrolysis efficiency, but also can reduce the stress concentration at the contact position to avoid crushing the diaphragm.

In one embodiment of the present invention, the gas-liquid diffuser should meet the mechanical and elastic requirements under installation pressure. For example, the elastic modulus of the gas-liquid diffuser in the direction perpendicular to its plane is between 50 and 20000 N/cm², preferably between 100 and 10000 N/cm². If the elastic modulus is too small, the gas-liquid diffuser is prone to deformation under the installation pressure of the electrolyzer, and cannot press the electrode or diaphragm tightly, which may lead to poor contact between the gas-liquid diffuser and the electrode or diaphragm; if the elastic modulus is too large, the gas-liquid diffuser will be in turn difficult to deform, which may cause excessive pressure at the contact position, and thereby the diaphragm may be damaged.

In another embodiment of the present invention, provided is an electrode with a diffusion layer, comprising an electrode and a gas-liquid diffuser of the present invention, wherein the electrode is welded onto the gas-liquid diffuser.

In still another embodiment of the present invention, provided is an electrode plate with a diffusion layer, comprising an electrode plate and a gas-liquid diffuser of the present invention, wherein the electrode plate comprises an anode plate, a cathode plate, and/or a bipolar plate, and is welded onto the gas-liquid diffuser.

In still another embodiment of the present invention, provided is an electrolyzer for hydrogen production by alkaline water electrolysis, comprising a gas-liquid diffuser of the present invention arranged between an electrode plate and a diaphragm.

In the description of the present invention, it should be noted that the orientation or positional relationship indicated by terms such as "upper," "lower," "inner," "outer," "front," "rear," "left," and "right" is the orientation or positional relationship based on the working state of the present invention. These terms are used only to facilitate the description of the present invention and to simplify the description, and do not indicate or imply that the device or components must have a specific orientation or be constructed and operated in a specific orientation. Therefore, they should not be construed as limiting the application.

The above description combines preferred embodiments to explain the present invention, but these embodiments are only exemplary and serve only illustrative purposes. On this basis, various substitutions and modifications can be made to the present invention, all of which fall within the scope of protection of the application.

## Claims

1. A gas-liquid diffuser for hydrogen production by alkaline water electrolysis, **characterized in that** the gas-liquid diffuser is arranged between an electrode plate and a diaphragm to form a gas-liquid diffusion layer, and the electrode plate comprises an anode plate, a cathode plate, and/or a bipolar plate, wherein the gas-liquid diffuser is made of a woven web or a mesh plate, the woven web or mesh plate is formed to have a plurality of flow channels alternately arranged on both sides of the gas-liquid diffuser by bending, and the cross section of the gas-liquid diffuser in a direction perpendicular to the plurality of flow channels is in a wavy shape formed by the cross section of the plurality of flow channels.

2. The gas-liquid diffuser according to claim 1, **characterized in that** the woven web or mesh plate is made of a metal and/or an alloy which is stable under alkaline conditions.

3. The gas-liquid diffuser according to claim 2, **characterized in that** the woven web or mesh plate is made of a material selected from the group consisting of nickel, stainless-steel, nickel-plated carbon steel, and titanium.

4. The gas-liquid diffuser according to claim 1, **characterized in that** the flow channels are in an isosceles trapezoidal shape.

5. The gas-liquid diffuser according to claim 4, **characterized in that** the isosceles trapezoid has upper and lower bases of 0.2-3.6 cm, and a height of 0.2-0.8 cm.

6. The gas-liquid diffuser according to any one of claims 1 to 5, **characterized in that** an electrode is further arranged between the gas-liquid diffuser and the diaphragm.

7. The gas-liquid diffuser according to any one of claims 1 to 5, **characterized in that** the gas-liquid diffuser is welded to the electrode plate and/or the electrode, and the electrode is made of a nickel mesh.

8. The gas-liquid diffuser according to any one of claims 1 to 5, **characterized in that** the elasticity of the gas-liquid diffuser in the direction perpendicular to its plane is between 50 and 20000 N/cm².

9. An electrode with a diffusion layer, comprising an electrode and the gas-liquid diffuser according to any one of claims 1 to 8, wherein the electrode is welded onto the gas-liquid diffuser.

10. An electrode plate with a diffusion layer, comprising an electrode plate and the gas-liquid diffuser according to any one of claims 1 to 8, the electrode plate comprises an anode plate, a cathode plate, and/or a bipolar plate, and is welded onto the gas-liquid diffuser.

11. An electrolyzer for hydrogen production by alkaline water electrolysis, comprising the gas-liquid diffuser according to any one of claims 1 to 8 arranged between an electrode plate and a diaphragm.
